# EUROPEAN PATENT APPLICATION

(11) **EP 3 866 106 A1**
(43) Date of publication of application: **18.08.2021**
(21) Application number: 20745936.3
(22) Date of filing: 22.01.2020
(51) Int. Cl.: G06T 5/00, H04N 21/485

(54) **BROADCAST SIGNAL TRANSMISSION METHOD, BROADCAST SIGNAL TRANSMISSION DEVICE, BROADCAST SIGNAL RECEPTION METHOD, AND BROADCAST SIGNAL RECEPTION DEVICE**

(30) Priority: 22.01.2019 KR 20190008085
(71) Applicant: LG Electronics Inc., Seoul 07336 (KR)
(72) Inventor: PARK, Jonghwan, Seoul 06772 (KR); YOON, Joonhee, Seoul 06772 (KR)
(74) Representative: Plasseraud IP
(86) International application number: PCT/KR2020/001078
(87) International publication number: WO 2020/153744

(57) **Abstract**

A broadcast signal reception method according to embodiments may comprise the steps of: receiving a broadcast signal including a media presentation description (MPD) and a segment including media data; parsing the MPD; and decoding the media data. The broadcast signal reception method according to embodiments may further comprise a step of rendering the media data, wherein the step of rendering the media data comprises displaying information related to MPD-based media data on a screen, and the information related to the media data indicates that the rendered media data is based on dynamic mapping information.

## Description

### [Technical Field]

Embodiments relate to an apparatus for transmitting a broadcast signal, an apparatus for receiving a broadcast signal, a method for transmitting a broadcast signal, and a method for receiving a broadcast signal.

### [Background Art]

In ultra high definition (UHD) broadcasting, by expressing luminance that have failed to be presented in existing contents, differentiation from existing broadcasting may be provided along with a high sense of realism. With the introduction of HDR, the range of implementable image luminance has increased, and the difference in characteristics between scenes has become larger than before. Accordingly, there is a need for a method of signaling adaptive luminance processing information for each scene and meaningful sequence in the MPD scheme hierarchy, which is the manifest file of MPEG DASH.

UHD High Dynamic Range (UHD HDR) content may present a wider range of chroma and luma than the existing High Definition (HD) content. However, the conventional HDR processing provides a static transfer function of the entire content, and thus cannot perform either luminance compression or value allocation according to the display or the unique characteristics of the scene.

The HDR dynamic mapping technique may provide a tone mapping function on a per frame basis or a per significant scene or sequence basis in consideration of the characteristics of the content and the range of color expression of the display. However, with this technique, system signaling, which is required on the IP DASH basis, is not provided.

### [Disclosure]

### [Technical Problem]

An object according to the embodiments, devised to address the above-described issues, is to provide a broadcast signal transmission/reception apparatus and broadcast signal transmission/reception method capable of storing and signaling adaptive luminance processing information for various scenes and significant sequences by extending the MPD scheme.

Another object according to the embodiments is to provide a broadcast signal transmission/reception apparatus and broadcast signal transmission/reception method capable of applying unique characteristics of a scene or luminance compression and value allocation suitable for a display, by providing a dynamic transfer function of the entire content.

Another object according to the embodiments is to provide a broadcast signal transmission/reception apparatus and broadcast signal transmission/reception method capable of defining and transmitting/receiving necessary system signaling when applying dynamic tone mapping based on IP DASH.

Embodiments are not limited to the above-described objects, and the scope of the embodiments may be extended to other objects that can be inferred by those skilled in the art based on the entire contents of the present disclosure.

### [Technical Solution]

A broadcast signal transmission/reception apparatus and broadcast signal transmission/reception method according to the embodiments may store and signal luminance information that is commonly applicable to MPD or adaptive to various scene characteristics.

The broadcast signal transmission/reception apparatus and broadcast signal transmission/reception method according to the embodiments may provide tone mapping in consideration of content and display characteristics.

With the broadcast signal transmission/reception apparatus and broadcast signal transmission/reception method according to the embodiments, necessary system signaling may be defined and transmitted/received when dynamic tone mapping is applied based on IP DASH.

### [Advantageous Effects]

A broadcast signal transmission/reception apparatus and broadcast signal transmission/reception method according to embodiments may provide high-quality HDR content transmission/reception services.

A broadcast signal transmission/reception apparatus and broadcast signal transmission/reception method according to embodiments may achieve various dynamic tone mapping methods in HDR content.

A broadcast signal transmission/reception apparatus and broadcast signal transmission/reception method according to embodiments may provide a general-purpose client such as a DASH client with content configured by applying dynamic tone mapping.

### [Description of Drawings]

The accompanying drawings illustrate embodiments of the disclosure and together with the description serve to explain the principle of the disclosure.

The drawings are included to provide a further understanding of the embodiments, and illustrate embodiments together with a description related to the embodiments.
FIG. 1 is a diagram illustrating a protocol stack according to embodiments.
FIG. 2 is a diagram illustrating a service discovery procedure according to embodiments.
FIG. 3 is a diagram illustrating a DASH (Dynamic Adaptive Streaming over HTTP) data model according to embodiments.
FIG. 4 is a diagram specifically illustrating the DASH data model according to embodiments.
FIG. 5 is a diagram illustrating an end to end (E2E) flow for providing HDR content according to embodiments.
FIG. 6 is a diagram illustrating a common flow of PQ10 and HLG10 according to embodiments.
FIG. 7 shows the configuration of common attributes and elements according to embodiments.
FIG. 8 shows a descriptor of common attributes and elements according to embodiments.
FIG. 9 shows a configuration of an HDRDynamicMapping element according to embodiments.
FIG. 10 shows an embodiment of a profile, an EssentialProperty descriptor, and a SupplementalProperty descriptor according to the embodiments.
FIG. 11 is a diagram illustrating a configuration of a system including an HTTP server and a DASH client according to embodiments.
FIG. 12 is a diagram illustrating a configuration of a receiver according to embodiments.
FIG. 13 is a diagram illustrating a configuration of a transmitter according to embodiments.
FIG. 14 depicts dynamic tone mapping according to embodiments in comparison to static tone mapping.
FIG. 15 illustrates a UI/UX of a receiver display according to embodiments.
FIG. 16 is a diagram illustrating a broadcast signal reception method according to embodiments.
FIG. 17 is a diagram illustrating a broadcast signal transmission method according to embodiments.

### [Best Mode]

Hereinafter, embodiments disclosed in this specification will be described in detail with reference to the accompanying drawings. The same or similar components are given the same reference numbers and redundant description thereof is omitted. The suffixes "module" and "unit" of elements herein are used for convenience of description and thus are used interchangeably and do not have any distinguishable meanings or functions. Further, in describing the embodiments disclosed in this specification, if a detailed description of related known techniques would unnecessarily obscure the gist of the embodiments disclosed in this specification, detailed description thereof will be omitted. In addition, the attached drawings are provided for easy understanding of the embodiments disclosed in this specification and do not limit technical idea disclosed in this specification, and the embodiments should be construed as including all modifications, equivalents, and alternatives falling within the spirit and scope of the present disclosure.

It is apparent that the following embodiments are intended to embody the present disclosure and are not intended to limit or restrict the scope of the present disclosure. All techniques easily conceivable by those skilled in the art from the detailed description and embodiments of the present disclosure are interpreted as belonging to the scope of the present disclosure.

The following detailed description is to be construed in all aspects as illustrative and not restrictive. The scope of the present disclosure should be determined by reasonable interpretation of the appended claims and all changes which come within the equivalent scope of the present disclosure are within the scope of the present disclosure.

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based on the intended meanings of the terms rather than their simple names or meanings. In addition, the accompanying drawings and the detailed description should not be construed as limiting the embodiments set forth herein and should be interpreted as covering all equivalents to the embodiments disclosed in the accompanying drawings and the detailed description or other substitutions.

Preferred embodiments of the embodiments will be described in detail, examples of which are shown in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the embodiments. However, it will be apparent to those skilled in the art that the embodiments can be practiced without such specific details.

Although most terms used in the embodiments have been selected from general ones widely used in the art, some terms have been arbitrarily selected by the applicant and their meanings are explained in detail in the following description as needed. Thus, the present disclosure should be understood based on the intended meanings of the terms rather than their simple names or meanings.

The embodiments provide an apparatus and method for transmitting and receiving broadcast signals for next-generation broadcast services. Next-generation broadcasting services according to an embodiment of the present disclosure include terrestrial broadcasting services, mobile broadcasting services, and UHDTV services. According to an embodiment of the present disclosure, a broadcast signal for a next-generation broadcast service may be processed through a non-Multiple Input Multiple Output (MIMO) or MIMO scheme. The non-MIMO scheme according to the embodiment of the present disclosure may include a Multiple Input Single Output (MISO) scheme and a Single Input Single Output (SISO) scheme.

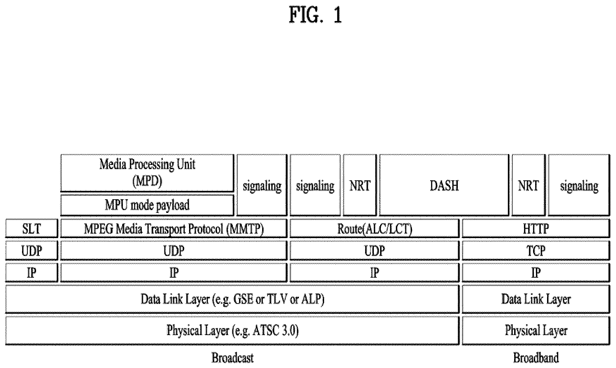

FIG. 1 is a diagram showing a protocol stack according to an embodiment of the present disclosure.

A service may be delivered to a receiver through a plurality of layers. First, a transmission side may generate service data. The service data may be processed for transmission at a delivery layer of the transmission side and the service data may be encoded into a broadcast signal and transmitted over a broadcast or broadband network at a physical layer.

Here, the service data may be generated in an ISO base media file format (BMFF). ISO BMFF media files may be used for broadcast/broadband network delivery, media encapsulation and/or synchronization format. Here, the service data is all data related to the service and may include service components configuring a linear service, signaling information thereof, non-real time (NRT) data and other files.

The delivery layer will be described. The delivery layer may provide a function for transmitting service data. The service data may be delivered over a broadcast and/or broadband network.

Broadcast service delivery may include two methods.

As a first method, service data may be processed in media processing units (MPUs) based on MPEG media transport (MMT) and transmitted using an MMT protocol (MMTP). In this case, the service data delivered using the MMTP may include service components for a linear service and/or service signaling information thereof.

As a second method, service data may be processed into DASH segments and transmitted using real time object delivery over unidirectional transport (ROUTE), based on MPEG DASH. In this case, the service data delivered through the ROUTE protocol may include service components for a linear service, service signaling information thereof and/or NRT data. That is, the NRT data and non-timed data such as files may be delivered through ROUTE.

Data processed according to MMTP or ROUTE protocol may be processed into IP packets through a UDP/IP layer. In service data delivery over the broadcast network, a service list table (SLT) may also be delivered over the broadcast network through a UDP/IP layer. The SLT may be delivered in a low level signaling (LLS) table. The SLT and LLS table will be described later.

IP packets may be processed into link layer packets in a link layer. The link layer may encapsulate various formats of data delivered from a higher layer into link layer packets and then deliver the packets to a physical layer. The link layer will be described later.

In hybrid service delivery, at least one service element may be delivered through a broadband path. In hybrid service delivery, data delivered over broadband may include service components of a DASH format, service signaling information thereof and/or NRT data. This data may be processed through HTTP/TCP/IP and delivered to a physical layer for broadband transmission through a link layer for broadband transmission.

The physical layer may process the data received from the delivery layer (higher layer and/or link layer) and transmit the data over the broadcast or broadband network. A detailed description of the physical layer will be given later.

The service will be described. The service may be a collection of service components displayed to a user, the components may be of various media types, the service may be continuous or intermittent, the service may be real time or non-real time, and a real-time service may include a sequence of TV programs.

The service may have various types. First, the service may be a linear audio/video or audio service having app based enhancement. Second, the service may be an app based service, reproduction/configuration of which is controlled by a downloaded application. Third, the service may be an ESG service for providing an electronic service guide (ESG). Fourth, the service may be an emergency alert (EA) service for providing emergency alert information.

When a linear service without app based enhancement is delivered over the broadcast network, the service component may be delivered by (1) one or more ROUTE sessions or (2) one or more MMTP sessions.

When a linear service having app based enhancement is delivered over the broadcast network, the service component may be delivered by (1) one or more ROUTE sessions or (2) zero or more MMTP sessions. In this case, data used for app based enhancement may be delivered through a ROUTE session in the form of NRT data or other files. In one embodiment of the present disclosure, simultaneous delivery of linear service components (streaming media components) of one service using two protocols may not be allowed.

When an app based service is delivered over the broadcast network, the service component may be delivered by one or more ROUTE sessions. In this case, the service data used for the app based service may be delivered through the ROUTE session in the form of NRT data or other files.

Some service components of such a service, some NRT data, files, etc. may be delivered through broadband (hybrid service delivery).

That is, in one embodiment of the present disclosure, linear service components of one service may be delivered through the MMT protocol. In another embodiment of the present disclosure, the linear service components of one service may be delivered through the ROUTE protocol. In another embodiment of the present disclosure, the linear service components of one service and NRT data (NRT service components) may be delivered through the ROUTE protocol. In another embodiment of the present disclosure, the linear service components of one service may be delivered through the MMT protocol and the NRT data (NRT service components) may be delivered through the ROUTE protocol. In the above-described embodiments, some service components of the service or some NRT data may be delivered through broadband. Here, the app based service and data regarding app based enhancement may be delivered over the broadcast network according to ROUTE or through broadband in the form of NRT data. NRT data may be referred to as locally cached data.

Each ROUTE session includes one or more LCT sessions for wholly or partially delivering content components configuring the service. In streaming service delivery, the LCT session may deliver individual components of a user service, such as audio, video or a closed caption stream. The streaming media is formatted into a DASH segment.

Each MMTP session includes one or more MMTP packet flows for delivering all or some of content components or an MMT signaling message. The MMTP packet flow may deliver a component formatted into MPU or an MMT signaling message.

For delivery of an NRT user service or system metadata, the LCT session delivers a file based content item. Such content files may include consecutive (timed) or discrete (non-timed) media components of the NRT service or metadata such as service signaling or ESG fragments. System metadata such as service signaling or ESG fragments may be delivered through the signaling message mode of the MMTP.

A receiver may detect a broadcast signal while a tuner tunes to frequencies. The receiver may extract and send an SLT to a processing module. The SLT parser may parse the SLT and acquire and store data in a channel map. The receiver may acquire and deliver bootstrap information of the SLT to a ROUTE or MMT client. The receiver may acquire and store an SLS. USBD may be acquired and parsed by a signaling parser.

In the broadcast signal transmission method and/or the broadcast signal reception method according to the embodiments, broadcast signals may be transmitted and/or received based on the protocol stack shown in FIG. 1.

Specifically, according to the broadcast signal transmission method and/or the broadcast signal reception method according to the embodiments, a broadcast signal may be transmitted and/or received based on the above-described MPEG DASH in the broadcast service delivery over a broadcast network.

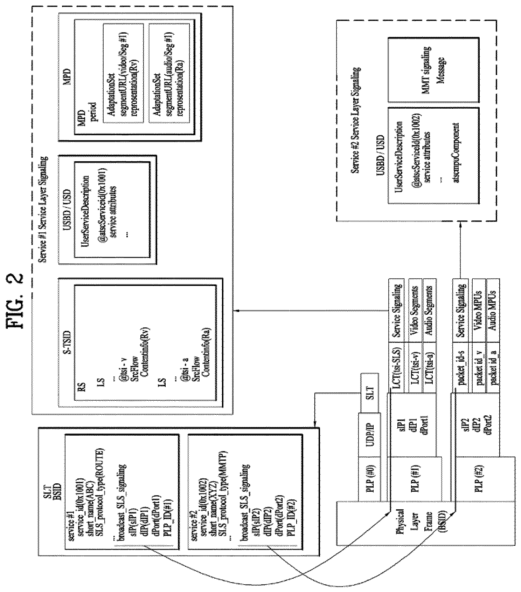

FIG. 2 is a diagram showing a service discovery procedure according to one embodiment of the present disclosure.

A broadcast stream delivered by a broadcast signal frame of a physical layer may carry low level signaling (LLS). LLS data may be carried in payloads of IP packets delivered to a well-known IP address/port. The LLS may include an SLT according to type thereof. The LLS data may be formatted in the form of an LLS table. A first byte of every UDP/IP packet carrying the LLS data may be the start of the LLS table. Unlike the shown embodiment, an IP stream for delivering the LLS data may be delivered to a PLP along with other service data.

The SLT may enable the receiver to generate a service list through fast channel scan and provides access information for locating the SLS. The SLT includes bootstrap information. This bootstrap information may enable the receiver to acquire service layer signaling (SLS) of each service. When the SLS, that is, service signaling information, is delivered through ROUTE, the bootstrap information may include an LCT channel carrying the SLS, a destination IP address of a ROUTE session including the LCT channel and destination port information. When the SLS is delivered through the MMT, the bootstrap information may include a destination IP address of an MMTP session carrying the SLS and destination port information.

In the shown embodiment, the SLS of service #1 described in the SLT is delivered through ROUTE and the SLT may include bootstrap information sIP1, dIP1 and dPort1 of the ROUTE session including the LCT channel delivered by the SLS. The SLS of service #2 described in the SLT is delivered through MMT and the SLT may include bootstrap information sIP2, dIP2 and dPort2 of the MMTP session including the MMTP packet flow delivered by the SLS.

The SLS is signaling information describing the properties of the service and may include receiver capability information for significantly reproducing the service or providing information for acquiring the service and the service component of the service. When each service has separate service signaling, the receiver acquires appropriate SLS for a desired service without parsing all SLSs delivered within a broadcast stream.

When the SLS is delivered through the ROUTE protocol, the SLS may be delivered through a dedicated LCT channel of a ROUTE session indicated by the SLT. In some embodiments, this LCT channel may be an LCT channel identified by tsi=0. In this case, the SLS may include a user service bundle description (USBD)/user service description (USD), service-based transport session instance description (S-TSID) and/or media presentation description (MPD).

Here, USBD/USD is one of SLS fragments and may serve as a signaling hub describing detailed description information of a service. The USBD may include service identification information, device capability information, etc. The USBD may include reference information (URI reference) of other SLS fragments (S-TSID, MPD, etc.). That is, the USBD/USD may reference the S-TSID and the MPD. In addition, the USBD may further include metadata information for enabling the receiver to decide a transmission mode (broadcast/broadband network). A detailed description of the USBD/USD will be given below.

The S-TSID is one of SLS fragments and may provide overall session description information of a transport session carrying the service component of the service. The S-TSID may provide the ROUTE session through which the service component of the service is delivered and/or transport session description information for the LCT channel of the ROUTE session. The S-TSID may provide component acquisition information of service components associated with one service. The S-TSID may provide mapping between DASH representation of the MPD and the tsi of the service component. The component acquisition information of the S-TSID may be provided in the form of the identifier of the associated DASH representation and tsi and may or may not include a PLP ID in some embodiments. Through the component acquisition information, the receiver may collect audio/video components of one service and perform buffering and decoding of DASH media segments. The S-TSID may be referenced by the USBD as described above. A detailed description of the S-TSID will be given below.

The MPD is one of SLS fragments and may provide a description of DASH media presentation of the service. The MPD may provide a resource identifier of media segments and provide context information within the media presentation of the identified resources. The MPD may describe DASH representation (service component) delivered over the broadcast network and describe additional DASH presentation delivered over broadband (hybrid delivery). The MPD may be referenced by the USBD as described above.

When the SLS is delivered through the MMT protocol, the SLS may be delivered through a dedicated MMTP packet flow of the MMTP session indicated by the SLT. In some embodiments, the packet_id of the MMTP packets delivering the SLS may have a value of 00. In this case, the SLS may include a USBD/USD and/or MMT packet (MP) table.

Here, the USBD is one of SLS fragments and may describe detailed description information of a service as in ROUTE. This USBD may include reference information (URI information) of other SLS fragments. The USBD of the MMT may reference an MP table of MMT signaling. In some embodiments, the USBD of the MMT may include reference information of the S-TSID and/or the MPD. Here, the S-TSID is for NRT data delivered through the ROUTE protocol. Even when a linear service component is delivered through the MMT protocol, NRT data may be delivered via the ROUTE protocol. The MPD is for a service component delivered over broadband in hybrid service delivery. The detailed description of the USBD of the MMT will be given below.

The MP table is a signaling message of the MMT for MPU components and may provide overall session description information of an MMTP session carrying the service component of the service. In addition, the MP table may include a description of an asset delivered through the MMTP session. The MP table is streaming signaling information for MPU components and may provide a list of assets corresponding to one service and location information (component acquisition information) of these components. The detailed description of the MP table may be defined in the MMT or modified. Here, the Asset is a multimedia data entity, which is associated with one unique ID, and may be used to generate one multimedia presentation. The Asset may correspond to service components configuring one service. A streaming service component (MPU) corresponding to a desired service may be accessed using the MP table. The MP table may be referenced by the USBD as described above.

Other MMT signaling messages may be defined. Additional information associated with the service and the MMTP session may be described by such MMT signaling messages.

The ROUTE session is identified by a source IP address, a destination IP address and a destination port number. The LCT session is identified by a unique transport session identifier (TSI) within the range of a parent ROUTE session. The MMTP session is identified by a destination IP address and a destination port number. The MMTP packet flow is identified by a unique packet_id within the range of a parent MMTP session.

In case of ROUTE, the S-TSID, the USBD/USD, the MPD or the LCT session delivering the same may be referred to as a service signaling channel. In case of MMTP, the USBD/UD, the MMT signaling message or the packet flow delivering the same may be referred to as a service signaling channel.

Unlike the shown embodiment, one ROUTE or MMTP session may be delivered over a plurality of PLPs. That is, one service may be delivered through one or more PLPs. Unlike the shown embodiment, in some embodiments, components configuring one service may be delivered through different ROUTE sessions. In addition, in some embodiments, components configuring one service may be delivered through different MMTP sessions. In some embodiments, components configuring one service may be divided and delivered in a ROUTE session and an MMTP session. Although not shown, components configuring one service may be delivered through broadband (hybrid delivery).

In the broadcast signal transmission method and/or the broadcast signal reception method according to the embodiments, broadcast signals may be transmitted and/or received based on the service discovery procedure illustrated in FIG. 2.

Specifically, according to the broadcast signal transmission method and/or the broadcast signal reception method according to the embodiments, a broadcast signal may be transmitted and/or received based on the description about the DASH media presentation of the service provided by the above-described MPD.

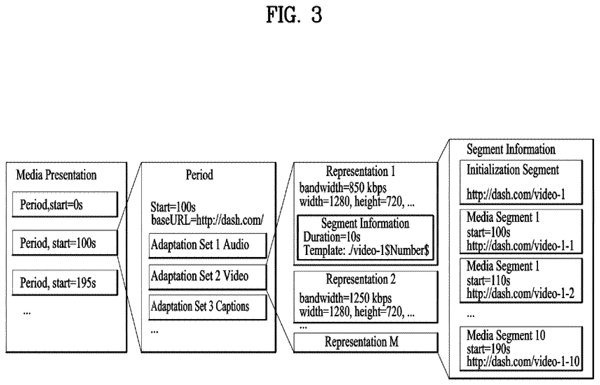

FIG. 3 is a diagram illustrating a DASH (Dynamic Adaptive Streaming over HTTP) data model according to embodiments.

According to the DASH data model according to the embodiments, a media presentation may include one or more periods. Each period may include one or more adaptation sets. Each adaptation set may include one or more representations. Each representation may include one or more Segment Informations. Each Segment Information may include an initialization segment and one or more media segments.

Referring to this figure, a period starting at a media time of 100 seconds has baseURL and includes Adaptation Set 1 for an audio component, Adaptation Set 2 for a video component, and/or Adaptation Set 3 for a caption component. Here, Adaptation Set 2 includes Representation 1 and Representation 2. Representation 1 represents a video component with a specification of bandwidth=850 kbps, width=1280, height=720, and the like, and Representation 2 represents a video component with a specification of bandwidth=1250 kbps, width=1280, height=720, and the like. Representation 1 includes Segment Information including information on a segment carrying a video component represented by Representation 1. The Segment Information includes duration and/or template information about a corresponding segment. In this figure, a segment for the video component indicated by Representation 1 has a duration of 10 seconds and a template of ./video-1-$Number$. In this figure, Representation 1 includes an Initialization Segment and Media Segment 1 to Media Segment 10. Also, the Segment Information includes information on the segment for Representation 1. In this figure, the Segment Information includes template information () of the Initialization Segment, presentation start time information (start=100s) and template information () of Media Segment 1, presentation start time information (start=110s) and template information () of Media Segment 2, and presentation start time information (start=190s) and template information () of Media segment 10.

According to embodiments, in the present disclosure, color gamut, color space, and color primaries may have the same meaning.

In the broadcast signal transmission method and/or the broadcast signal reception method according to the embodiments, broadcast signals may be transmitted and/or received based on the DASH data model shown in FIG. 3.

Specifically, according to the broadcast signal transmission method and/or the broadcast signal reception method according to the embodiments, a broadcast signal may be transmitted and/or received based on information provided by Representations included in the above-described Adaptation Set.

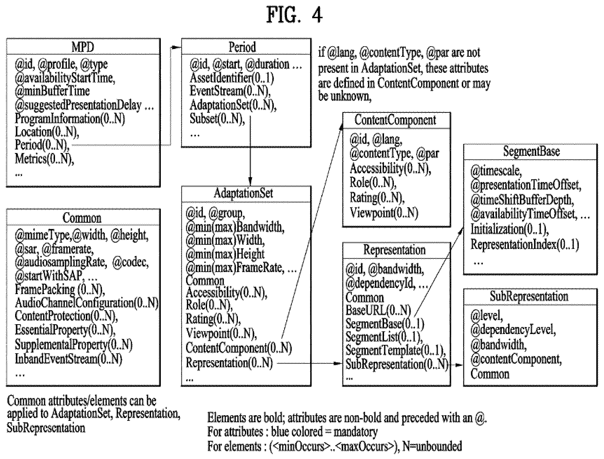

FIG. 4 is a diagram specifically illustrating the DASH data model according to embodiments.

The DASH data model according to the embodiments may be represented as a relationship between an MPD element, a Period element, an AdaptationSet element, a Representation element, a SubRepresentation element, a ContentComponent element, and/or a SegmentBase element.

The MPD element includes @id, @profile, @type @availabilityStartTime, @minBufferTime @suggestedPresentationDelay, ProgramInformation(0..N), Location(0..N), Period(0..N), and/or Metrics(0..N). Here, @profile and/or @minBufferTime may be mandatory fields.

The Period element includes @id, @start, @duration, AssetIdentifier(0..1), EventStream(0..N), AdaptationSet(0..N), and/or Subset(0..N).

The AdaptationSet element includes @id, @group, @min(max)Bandwidth, @min(max)Width, @min(max)Height, @min(max)FrameRate, Common, Accessibility(0..N), Role(0..N), Rating(0..N), Viewpoint(0..N), ContentComponent(0..N) and/or Representation(0..N).

The Representation element includes @id, @bandwidth, @dependencyId, Common, BaseURL(0..N), SegmentBase(0..1), SegmentList(0..1), SegmentTemplate(0..1), and/or SubRepresentation(0..N). Here, @id and/or @bandwidth may be mandatory fields.

The SubRepresentation element includes @level, @dependencyLevel, @bandwidth, @contentComponent, and/or Common.

The ContentComponent element includes @id, @lang, @contentType, @par, Accessibility(0..N), Role(0..N), Rating(0..N), and/or Viewpoint(0..N). Here, when @lang, @contentType, and/or @par are not present in the AdaptationSet, these fields may or may not be defined in the ContentComponent.

The SegmentBase element includes @timescale, @presentationTimeOffset, @timeShiftBufferDepth, @availabilityTimeOffset, Initialization(0..1), and/or RepresentationIndex (0..1).

The DASH data model according to an embodiment of the present disclosure includes common attributes and elements.

The common attributes and elements include @mimeType, @width, @height, @sar, @framerate, @audiosamplingRate, @codec, @startWithSAP, FramePacking (0..N), AudioChannelConfiguration(0..N), ContentProtection(0..N), EssentialProperty(0..N), SupplementalProperty(0..N), and/or InbandEventStream (0..N).

The above-described common attributes and elements may be included and applied in the AdaptationSet, Representation, and/or SubRepresentation.

In this figure and the above description, fields marked with @ in front of the field name represent attributes, and fields without @ represent elements. In addition, (0..N) following the element name indicates that the number of the elements is at least 0 and at most N. Here, N indicates that the limit has not been set.

According to an embodiment of the present disclosure, description of an element or attribute in the MPD conforms to the definition in the DASH standard.

MPD is a description of a media presentation for providing a streaming service.

Period represents the interval of a media presentation. A successive sequence of all periods constitutes the media presentation.

Segment represents a unit of data associated with the URL and byte range described by the MPD.

Adaptation Set represents a set of interchangeable encoded versions of one or more media content components.

Representation represents a set and insulation of one or more media streams in a transport format.

Sub-Representation represents a part of a Representation described by the MPD.

In the broadcast signal transmission method and/or the broadcast signal reception method according to the embodiments, broadcast signals may be transmitted and/or received based on the specific DASH data model illustrated in FIG. 4.

Specifically, according to the broadcast signal transmission method and/or the broadcast signal reception method according to the embodiments, a broadcast signal may be transmitted and/or received based on the above-described common attributes and elements.

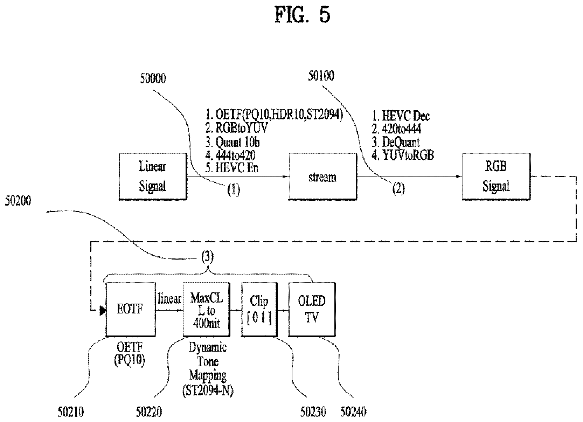

FIG. 5 is a diagram illustrating an end to end (E2E) flow for providing HDR content according to embodiments.

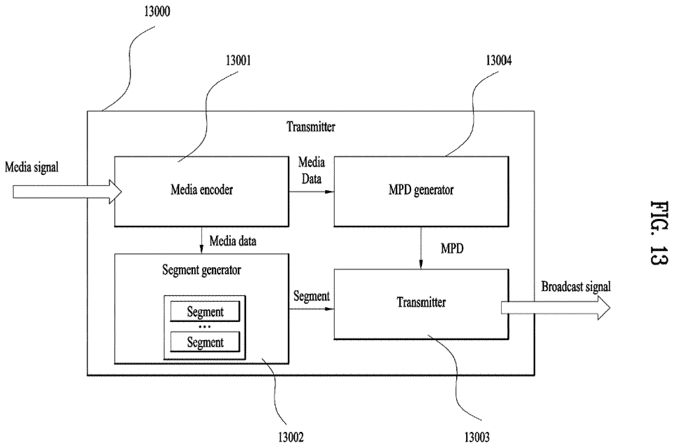

Referring to FIG. 13, a broadcast signal transmission apparatus according to embodiments may include an encoder 13001, an MPD generator 13004, a segment generator 13002 and/or a transmitter 13003. Referring to this figure, the broadcast signal transmission apparatus according the embodiments may further include an OETF executer and/or a preprocessor. The broadcast signal transmission apparatus according to the embodiments will be described later in detail with reference to FIG. 13.

The broadcast signal transmission apparatus according to the embodiments may perform operation 50000 of converting a linear signal into a stream. The stream may include a media stream carrying media data. The operation 50000 may include OETF conversion, RGBtoYUV, Quant 10b, 444to420, and/or HEVC encoding.

The OETF executer may perform the OETF conversion. The OETF executer may perform an appropriate operation on the linear signal according to a transmission curve. The OETF executer may transmit, to the preprocessor, the linear signal on which an appropriate operation has been performed according to the transmission curve. Here, OETF (Optical-Electro Transfer Function) is a conversion function representing the relationship between the digital input of the display and the output luminance, or the relationship between the input luminance and the digital output of the display.

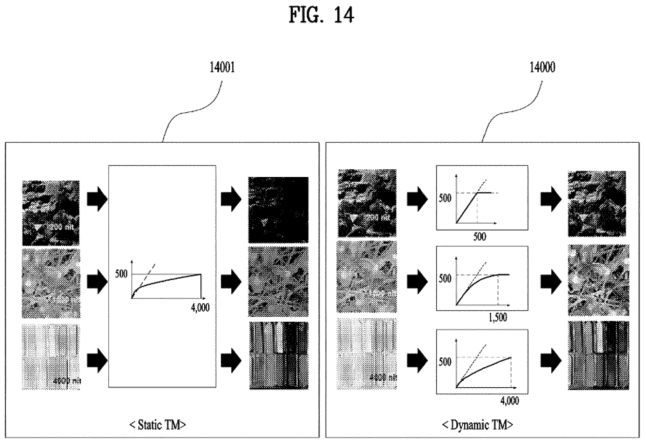

For example, the above-described operation may be performed according to the PQ10 system to which a perceptual quantization (PQ) curve described in ITU-R BT.2100 is applied. The above-described operation may be performed according to the HDR10 system further including data about static tone mapping in the PQ10 bitstream. A detailed description of the static tone mapping will be described later with reference to FIG. 14. The above-described operation may be performed according to the system described in SMPTE ST2094 which further includes data about dynamic tone mapping in the PQ bitstream. A detailed description of the dynamic tone mapping will be described later with reference to FIG. 14.

The preprocessor may perform the RGBtoYUV execution. The preprocessor may convert linear data having R/G/B data of 8/8/8 input bits into Y/U/V digital linear data of 10/10/10 bits. Here, the Y data is data including luminance information, and U/V data is data including color difference information.

The preprocessor may perform the operation Quant 10b. The preprocessor may scale the linear data to a specific bit depth. For example, the preprocessor may scale linear data to a 10-bit depth.

The preprocessor may perform the operation 444to420. The preprocessor 50001 may convert UHD linear data of 4:4:4 sampling into UHD linear data of 4:2:0 sampling.

The preprocessor may deliver the linear signal preprocessed by performing the above-described operations to the HEVC encoder.

The HEVC (High Efficiency Video Codec) encoder may refer to the encoder 13001 of FIG. 13. The HEVC encoder may perform the HEVC encoding on the preprocessed linear signal. The HEVC encoder may encode the preprocessed linear signal into a stream and transmit the same to a broadcast signal reception apparatus.

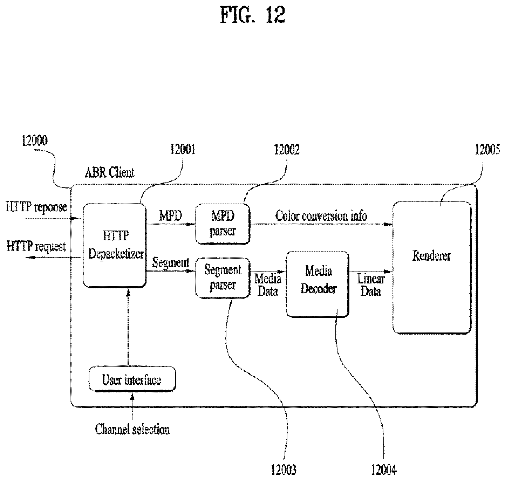

Referring to FIG. 12, a broadcast signal reception apparatus according to embodiments may include a depacketizer 12001, an MPD parser 12002, a segment parser 12003, a decoder 12004, a renderer 12005, and/or a user interface (UI). Further, referring to this figure, the broadcast signal reception apparatus according to the embodiments may further include a post-processor, an EOTF executer, a MaxCLL to 400nit executer, a Clip[0 1] executer, and/or an OELD TV. The broadcast signal reception apparatus according to the embodiments will be described later in detail with reference to FIG. 12.

The broadcast signal reception apparatus according to the embodiments may perform an operation 50100 of converting a stream into an RGB signal and/or an operation 50200 of converting the RGB signal into a linear signal, rendering the converted signal, and displaying the same on a display. The operation 50100 may include HEVC decoding, an operation 420to444, an operation DeQuant, and/or an operation YUVtoRGB. The operation 50200 may include EOTF conversion 50210, an operation 50220 of MaxCLL to 400 nit, an operation 50230 of Clip[0 1], and/or an operation 50240 of display on an OLED TV.

The HEVC decoder may refer to the decoder 12004 of FIG. 12. The HEVC decoder may perform the HEVC decoding on a stream carrying media data. The HEVC decoder may deliver the decoded stream to the post-processor.

The post-processor may perform the execution operation of 420to444. The post-processor may convert UHD media data of 4:2:0 sampling into UHD media data of 4:4:4 sampling.

The post-processor may perform the operation of DeQuant execution. The post-processor may dequantize the media data scaled to a specific bit depth. For example, the post-processor may dequantize media data scaled to a 10-bit depth.

The post-processor may perform the operation of YUVtoRGB execution. The post-processor may convert input Y/U/V digital media data of 10/10/10 bits into R/G/B data of 8/8/8 bits.

The post-processor may convert the stream decoded by the above-described operations into an RGB signal and transmit the converted signal to the EOTF executer.

The EOTF executer may perform the EOTF conversion 50210. The EOTF executer may perform an appropriate operation on the RGB signal according to the transmission curve used in the encoding process. For example, the EOTF executer may perform an operation using a PQ10 curve for the RGB signal. The EOTF executer may convert the RGB signal into a linear signal and deliver the converted signal to the MaxCLL to 400nit executer.

The MaxCLL to 400nit executer may be included in the renderer 12005 of FIG. 12. The MaxCLL to 400nit executer may perform the MaxCLL to 400nit operation 50220. Specifically, in the MaxCLL to 400nit operation 50220, the dynamic tone mapping process described in SMPTE ST2094 may be performed. For example, the process of ST2094-10, SL-HDR2 and/or ST2094-40 described in SMPTE ST2094 may be performed. The MaxCLL to 400nit executer may transmit the linear signal on which the dynamic tone mapping process has been performed to the Clip[0 1] executer. The MaxCLL to 400nit operation 50220 by the MaxCLL to 400nit executer according to the embodiments is not limited to 400nit.

The Clip[0 1] executer may be included in the renderer 12005 of FIG. 12. The Clip[0 1] executer may perform the Clip[0 1] operation 50230. In the the Clip[0 1] operation 50230, a clipping option may be set so as not to display luminance components above or below a certain component. In the Clip[0 1] operation 50230, data having linear values may be converted such that capturing and displaying are symmetrical. The Clip[0 1] executer may transmit the linear signal on which the Clip[0 1] operation 50230 is performed to the OLED TV.

The OLED TV may perform the OLED TV display operation 50240. The OLED TV may display the linear signal that has gone through all the above operations on OLED TV. The OLED TV according to the embodiments is not limited to a display employing OLEDs.

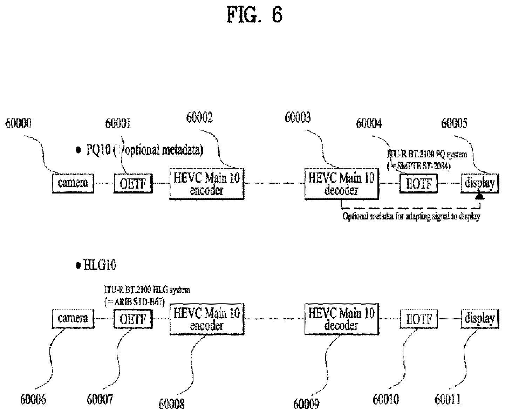

FIG. 6 is a diagram illustrating a common flow of PQ10 and HLG10 according to embodiments.

This figure illustrates a common flow of a broadcast signal transmission apparatus or method and a broadcast signal reception apparatus or method for providing HDR content with reference to FIG. 5 when the Perceptual Quantization (PQ)10 bitstream format or the Hybrid Log-Gamma (HLG)10 bitstream format according to embodiments is used.

Here, the above-described PQ10 may refer to a PQ HDR solution of non-constant luminance YCbCr, narrow range and color primaries and 10-bit coding described in ITU-R-BT.2100, and the PQ10 bitstream format may refer to the bitstream format described in L.3.3.6 of is ETSI TS 101 154. Also, the HLG10 described above may refer to the HLG HDR solution of non-constant luminance YCbCr, narrow range and color primaries and 10-bit coding described in ITU-R-BT.2100, and the HLG10 bitstream format may refer to the bitstream format described in L.3.3.6 of ETSI TS 101 154.

The broadcast signal transmission method using PQ10 according to embodiments may include capturing through the camera 60000, OETF conversion, and/or HEVC Main 10 encoding.

Specifically, the broadcast signal transmission apparatus using PQ10 according to embodiments may include a camera 60000, an OETF executer 60001, and/or an HEVC Main 10 encoder 60002. The OETF executer 60001 may refer to the OETF executer of FIG. 5, but uses the PQ system described in ITU-R BT.2100. The HEVC Main 10 encoder 60002 may refer to the encoder 13001 of FIG. 13. That is, media data transmitted by the broadcast signal transmission apparatus according to the embodiments may include HDR content and may be encoded based on the HEVC scheme.

The camera 60000 may perform the operation of capturing through the camera 60000. An image captured through the camera 60000 may be transmitted to the OETF executer 60001 in the form of a linear signal.

The OETF executer 60001 has been described in detail with reference to FIG. 5.

The HEVC Main 10 encoder 60002 may perform the HEVC Main 10 encoding. The HEVC Main 10 encoder 60002 may deliver a single layer HEVC Main 10 bitstream generated by encoding a linear signal obtained through the OETF conversion to a broadcast signal reception apparatus. Here, the bitstream may include a media stream carrying media data. The HEVC Main 10 encoder 60002 may be an encoder employing 10-bit coding for an HEVC-based broadcast service.

In addition, the HEVC Main 10 encoder 60002 may include optional metadata related to media data for the linear signal subjected to PQ OETF conversion. Specifically, the optional metadata may be information related to the luminance of the HDR content, and may be carried in the MPD. For example, the optional metadata may be information on dynamic tone mapping 14000, which will be described later with reference to FIG. 14.

The broadcast signal reception method using the PQ10 according to the embodiments may include HEVC Main 10 decoding, EOTF conversion, and/or displaying.

Specifically, a broadcast signal reception apparatus using PQ10 according to embodiments may include an HEVC Main 10 decoder 60003, an EOTF executer 60004, and/or a display 60005. The HEVC Main 10 decoder 60003 may refer to the decoder 12004 of FIG. 12. The EOTF executer 60004 may refer to the EOTF executer of FIG. 5, but uses the PQ system described in ITU-R BT.2100. The display 60005 may be included in the renderer 12005 of FIG. 12. That is, media data received by the broadcast signal reception apparatus according to the embodiments may include HDR content and may be decoded based on the HEVC scheme.

The HEVC Main 10 decoder 60003 may perform the HEVC Main 10 decoding. The HEVC Main 10 decoder 60003 may receive a single layer HEVC Main 10 bitstream. Here, the bitstream may include a media stream carrying media data. The HEVC Main 10 decoder 60003 may decode the media data and deliver the decoded media data to the EOTF executer 60004. Here, the HEVC Main 10 decoder 60003 may be a decoder employing 10-bit coding for an HEVC-based broadcast service.

In addition, the HEVC Main 10 decoder 60003 may deliver information related to the media data included in the received bitstream to the display 60005. Specifically, the HEVC Main 10 decoder 60003 may deliver information related to the luminance of the HDR content to the display 60005 based on the MPD included in the received bitstream. For example, the HEVC Main 10 decoder 60003 may deliver information about the dynamic tone mapping 14000, which will be described later with reference to FIG. 14, to the display 60005.

The EOTF executer 60004 has been described in detail with reference to FIG. 5. The EOTF executer 60004 may perform EOTF conversion based on the PQ system described in ITU BT.2100. The PQ system described in ITU BT.2100 may be the same as the EOTF conversion function described in SMPTE ST2084.

The display 60005 may perform the displaying operation. The display 60005 may display the received linear signal and/or information related to the received media data.

The broadcast signal transmission method using HLG10 according to embodiments may include capturing through the camera 60006, OETF conversion, and/or HEVC Main 10 encoding.

Specifically, the broadcast signal transmission apparatus using HLG10 according to embodiments may include a camera 60006, an OETF executer 60007, and/or an HEVC Main 10 encoder 60008. The OETF executer 60007 may refer to the OETF executer of FIG. 5, but uses the HLG system described in ITU-R BT.2100. The HEVC Main 10 encoder 60008 may refer to the encoder 13001 of FIG. 13.

The camera 60006 may perform the operation of capturing through the camera 60006. An image captured through the camera 60006 may be transmitted to the OETF executer 60007 in the form of a linear signal.

The OETF executer 60007 has been described in detail with reference to FIG. 5. The OETF executer may perform OETF conversion based on the HLG system described in ITU-R BT.2100. The HLG system described in ITU-R BT.2100 may be the same as the OETF conversion function described in ARIB STD-B67.

The HEVC Main10 encoder 60008 may perform the HEVC Main 10 encoding. The HEVC Main10 encoder 60008 may deliver a single layer HEVC Main 10 bitstream generated by encoding a linear signal subjected to OETF conversion to the broadcast signal reception apparatus. Here, the bitstream may include a media stream carrying media data. The HEVC Main 10 encoder 60008 may be an encoder employing 10-bit coding for an HEVC-based broadcast service.

A broadcast signal reception method using HLG10 according to the embodiments may include HEVC Main 10 decoding, EOTF conversion, and/or displaying.

Specifically, a broadcast signal reception apparatus using HLG10 according to embodiments may include an HEVC Main 10 decoder 60009, an EOTF executer 60010, and/or a display 60011. The HEVC Main 10 decoder 60009 e may refer to the decoder 12004 of FIG. 12. The EOTF executer 60010 may refer to the EOTF executer of FIG. 5, but uses the HLG system described in ITU-R BT.2100. The display 60011 may be included in the renderer 12005 of FIG. 12.

The HEVC Main 10 decoder 60009 may perform the HEVC Main 10 decoding. The HEVC Main 10 decoder 60009 may receive a single layer HEVC Main 10 bitstream. Here, the bitstream may include a media stream carrying media data. The HEVC Main 10 decoder 60009 may decode the media data and deliver the decoded media data to the EOTF executer 60010. The HEVC Main 10 decoder 60009 may be a decoder employing 10-bit coding for an HEVC-based broadcast service.

The EOTF executer 60010 has been described in detail with reference to FIG. 5.

The display 60011 may perform the displaying operation. The display 60011 may display the received linear signal.

Content according to the broadcast signal transmission and reception methods using the HLG10 described above may be compatible with a player supporting BT.2020. Here, the player may be a software component or a hardware device including one or more decoders.

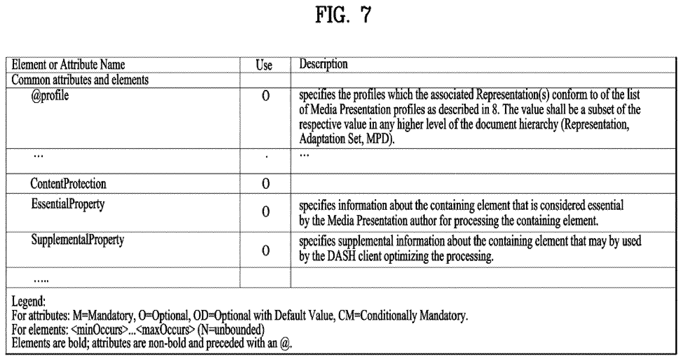

FIG. 7 shows the configuration of common attributes and elements according to embodiments.

Optional metadata related to the media data included in the linear signal on which PQ OETF conversion has been performed by the HEVC Main 10 encoder 60002 described above with reference to FIG. 6 may be included in the MPD.

Specifically, the optional metadata may be included in the CommonAttributesElements element included in the AdaptationSet element in the MPD. Here, the CommonAttributesElements element may include common attributes and elements. The relationship and detailed description of the AdaptationSet element, the common attributes and elements have been described above with reference to FIG. 4.

This figure shows the semantics of the common attributes and elements according to the embodiments.

According to the embodiments, the common attributes and elements may include @profile, ContentProtection, EssentialProperty, and/or SupplementalProperty. Here, @profile, ContentProtection, EssentialProperty, and SupplementalProperty may be optional fields.

The attribute @profile specifies a profile to which the associated representation conforms to in the list of media presentation profiles. The value of this attribute may be a subset of values in any higher level of the document hierarchy (Representation, Adaptation Set, MPD).

The element EssentialProperty specifies information about an element mandatory for processing of the element included in the Media Presentation author.

The element SupplementalProperty specifies supplemental information about the element that may be used by the DASH client to optimize the processing.

The broadcast signal reception apparatus according to the embodiments may check information about the HDR property based on the information about the mandatory element included in the EssentialProperty element in the acquired MPD.

The broadcast signal reception apparatus according to the embodiments may perform dynamic tone mapping according to embodiments based on the supplemental information about the element that may be used by the DASH client included in the element SupplementalProperty in the acquired MPD to optimize the processing.

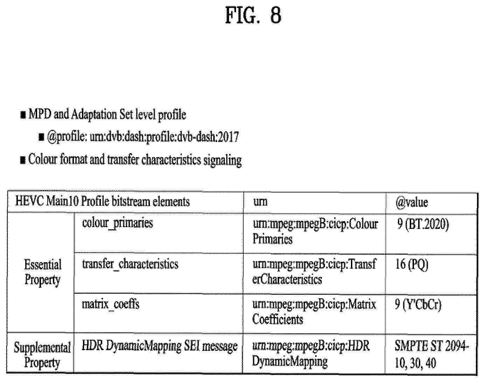

FIG. 8 shows a descriptor of common attributes and elements according to embodiments.

This figure may show a descriptor for attributes and elements included in CommonAttributesElements described above with reference to FIG. 7. Here, the attributes may include an attribute @profile, and the elements may include an element EssentialProperty and an element SupplementalProperty.

@profile of the MPD and AdaptationSet level according to the embodiments specifies a profile to which the associated representation conforms to in the list of media presentation profiles. The value of this attribute may be a subset of values in any higher level of the document hierarchy (Representation, Adaptation Set, MPD).

For example, @profile of the MPD and AdaptationSet level may reference urn:dvb:dash:profile:dvb-dash:2017 described in clause 4.1 of the standard ETSI TS 103 285.

The HEVC Main10 Profile bitstream elements may signal information indicating the property of HDR content included in the transmitted media data. For example, information indicating the property of the HDR content may include color format information and transfer characteristics information.

HEVC Main10 Profile bitstream elements may include an element EssentialProperty and an element SupplementalProperty. Specifically, they may be contained in the MPD in the HEVC Main 10 Profile bitstream. The element EssentialProperty may include information indicating an HDR property. For example, colour_primaries, transfer_characteristics, and/or matrix_coeffs may be included in the EssentialProperty desciptor.

urn may indicate @schemeldUri of each element. @schemeldUri indicates a URI (Uniform Resource Identifier) that identifies the scheme. The semantic of an element may be specified with the scheme described by @schemeldUri. @schemeldUri may be URN (Uniform Resource Names) or URL (Uniform Resource Locators).

@value may indicate a value for each element. The space and semantics for this value may be defined by the scheme identified by @schemeldUri. @value may take the int form or string form.

@schemeldUri of colour_primaries may have urn:mpeg:mpegB:cicp:ColourPrimaries. @value of colour_primaries may have 9, which is a value suggested by ITU-R BT.2020 for HDR content having non-constant luminance.

@schemeldUri of transfer_characteristics may have urn:mpeg:mpegB:cicp:TransferCharacteristics. @value of transfer_characteristics may have 16, which is a value suggested by ITU-R BT.2100 for HEVC HDR bitstreams using PQ10.

@schemeldUri of matrix_coeffs may have urn:mpeg:mpegB:cicp:MatrixCoefficients. @value of matrix_coeffs may have 9, which is a value suggested by ITU-R BT.2020 for HDR content having non-constant luminance.

When @profile of the MPD and AdaptationSet level has the suggested urn, and the colour_primaries, transfer_characteristics and matrix_coeffs of the element EssentialProperty have the suggested values of @schemeldUri and @value, the AdaptationSet uses the PQ10 bitstream.

The AdaptationSet using the PQ10 bitstream may further include an SEI message containing HDR dynamic mapping information. In this case, the HDR dynamic mapping information is signaled by the SupplementalProperty descriptor included in the AdaptationSet.

The element SupplementalProperty may include information for dynamic mapping. Specifically, the SupplementalProperty descriptor may include @schemeUri of HDR dynamic mapping information and @value of HDR dynamic mapping information.

When @SchemeldUri of the SupplementalProperty descriptor has one of urn:mpeg:mpegB:cicp:HDRDynamicMapping, urn:dvb:dash:hdr-dmi or http://dashif.org/metadata/hdr, and @value of the SupplementalProperty descriptor has one of 10 ST2094-10 or SMPTE2094-10, the HDR dynamic mapping information may be HDR dynamic mapping encoding type information described in 5.14.4.4.3.4.3 of ETSI TS 101 154.

When @schemeldUri of the SupplementalProperty descriptor has one of urn:mpeg:mpegB:cicp:HDRDynamicMapping, urn:dvb:dash:hdr-dmi or http://dashif.org/metadata/hdr, and @value of the SupplementalProperty descriptor has one of 30, ST2094-30, TS 103433, or SL-HDR2, the HDR dynamic mapping information may be HDR dynamic mapping encoding type information described in 5.14.4.4.3.4.4 of ETSI TS 101 154.

When @schemeldUri of the SupplementalProperty descriptor has one of urn:mpeg:mpegB:cicp:HDRDynamicMapping, urn:dvb:dash:hdr-dmi or http://dashif.org/metadata/hdr, and @value of the SupplementalProperty descriptor has one of 40, ST2094-40 or SMPTE2094-40, the HDR dynamic mapping information may be HDR dynamic mapping encoding type information described in 5.14.4.4.3.4.5 of ETSI TS 101 154.

The element Representation may include an SEI message for one or more HDR dynamic mapping schemes. In this case, the AdaptationSet element may have one or more SupplementalProperty descriptors specifying HDR dynamic mapping information.

The SypplementalProperty descriptor of AdaptationSet may satisfy any one of the above-described conditions and may be signaled. In this case, the dynamic mapping information signaled by the HDR dynamic mapping scheme is present in all Representations for all frames included in the AdaptationSet.

When the above-described common attributes and elements satisfy the conditions presented in this figure, the broadcast signal reception apparatus according to the embodiments may decode media data based on PQ10 and apply dynamic tone mapping to optimize the processing.

Specifically, the broadcast signal reception apparatus according to the embodiments may apply appropriate dynamic tone mapping according to the capability of the receiver. For example, when the receiver supports PQ10 based decoding and also supports HDR dynamic mapping decoding described in 5.14.4.4.3.4.3 of ETSI TS 101 154, dynamic tone mapping described in SMPTE ST2094-10 may be applied.

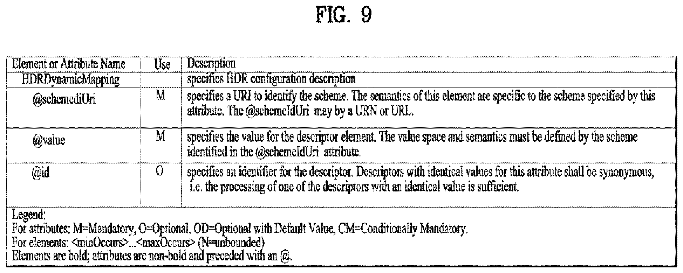

FIG. 9 shows a configuration of an HDRDynamicMapping element according to embodiments.

This figure may show the configuration of the element HDRDynamincMapping, which is an embodiment of the element SupplementalProperty described above with reference to FIG. 8.

The HDR configuration description according to the embodiments may be described in the element HDRDynamicMapping.

The element HDRDynamicMapping may include @schemeIdUri, @value, and/or @id. Here, @schemeIdUri and @value are mandatory fields, and @id may be an optional field.

@schemeIdUri and @value have been described in detail with reference to FIG. 8.

@id may spedify an identifier for this descriptor. Descriptors having the same value of this attribute may be identical to each other. That is, when there are descriptors having the same value of this attribute, it may be sufficient to process only one of these descriptors.

The element HDRDynamicMapping according to the embodiments may include supplementary metadata about media data. Specifically, the element HDRDynamicMapping according to the embodiments may include information about dynamic tone mapping that may be used to optimize the processing in the broadcast signal reception apparatus. For example, the element HDRDynamicMapping according to the embodiments may determine the type of dynamic tone mapping to be applied to the receiver based on @schemeUri, @value, and/or @id.

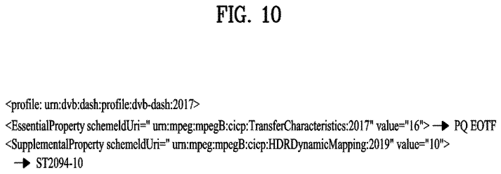

FIG. 10 shows an embodiment of a profile, an EssentialProperty descriptor, and a SupplementalProperty descriptor according to the embodiments.

This figure may show an embodiment in which the common attributes and elements described above with reference to FIG. 7 satisfy the descriptor described above with reference to FIG. 8.

In embodiments, the attribute @profile of the MPD and AdaptationSet level has um:dvb:dash:profile:dvb-dash:2017.

@profile has been described in detail with reference to FIGS. 4 and 8.

In embodiments, @schemeldUri of the element EssentialProperty has urn:mpeg:mpegB:cicp:TransferCharacteristics:2017, and @value has 16. In this case, the AdaptationSet may use a PQ EOTF curve.

In embodiments, @schemeldUri of the element SupplementalProperty has urn:dvb:dash:hdr-dmi and @value has 10. In this case, HDR dynamic mapping of the ST2094-10 type may be used.

The broadcast signal transmission apparatus according to the embodiments may transmit the common attribute and element information as shown in this figure in a bitstream.

Specifically, the MPD generator of FIG. 6 may generate an MPD including common attribute and element information as shown in this figure and deliver the same to the transmitter 13003. The transmitter 13003 may transmit a bitstream containing the MPD to the broadcast signal reception apparatus.

The broadcast signal reception apparatus according to the embodiments may receive the bitstream containing the common attribute and element information as shown in this figure. In this case, dynamic tone mapping 14000, which will be described later with reference FIG. 14, may be applied.

Specifically, the HEVC Main 10 decoder 60009 of FIG. 6, which may refer to the decoder 12004 of FIG. 12, may decode media data based on the received MPD and deliver the decoded data to the renderer 12005. The renderer 12005 may render a display to which the dynamic tone mapping 14000 is applied.

When the received MPD satisfies the conditions presented in this figure, the broadcast signal reception apparatus according to the embodiments may apply the dynamic tone mapping type described in SMPTE ST2094-10. In this case, the broadcast signal reception apparatus according to the embodiments may dynamically map a luminance range of the received media data.

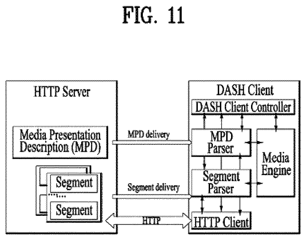

FIG. 11 is a diagram illustrating a configuration of a system including an HTTP server and a DASH client according to embodiments.

This figure shows an embodiment of a broadcast signal reception apparatus that carries out the broadcast signal receiving method according to the embodiments. The broadcast signal reception apparatus according to the embodiments may be a dynamic adaptive streaming over HTTP (DASH)-based client.

According to embodiments, DASH, which is a scheme for supporting HTTP-based adaptive streaming, supports dynamic streaming considering network conditions and the like to support seamless playback of A/V content. This figure shows the overall operation procedure for DASH-based adaptive streaming.

According to embodiments, the DASH client includes a DASH client controller, an MPD parser, a segment parser, an HTTP client, and/or a media engine.

The MPD (Media Presentation Description) is a file containing detailed information enabling the DASH client to dynamically acquire a segment, and may be expressed in the XML format.

The DASH client controller dynamically generates a command requesting the MPD and segment based on the network conditions and the like, and enables the media engine or the like to use the acquired information.

The MPD parser parses the acquired MPD in real time and allows the DASH client controller to generate a command for acquiring a necessary segment.

The segment parser may parse the acquired segment in real time and perform a specific operation of the media engine according to the details included in the segment.

The HTTP client makes a request for the necessary segment to the HTTP server and delivers the MPD/segment included in the HTTP response acquired from the server to the MPD/segment parser.

The media engine displays the segment on the screen based on the media information contained in the segment.

According to embodiments, the DASH client preferentially acquires the MPD. Then, it selects an appropriate Representation based on the information described in the MPD and makes a request for a segment to the server using access information for the segment included in the Representation. After acquiring the segment, it delivers the same to the media engine so as to be displayed on the screen. The DASH client adaptively requests and acquires necessary segments by reflecting the playback time and network conditions in real time, and delivers the same to the media engine, thereby supporting seamless content playback.

The broadcast signal reception apparatus according to the embodiments shown in FIG. 11 and the broadcast signal reception method according thereto may be further expressed as shown in FIG. 12, which will be described later from the client perspective.

FIG. 12 is a diagram illustrating a configuration of a receiver according to embodiments.

According to the embodiments, the receiver 12000 may be an adaptive bitrate (ABR) client.

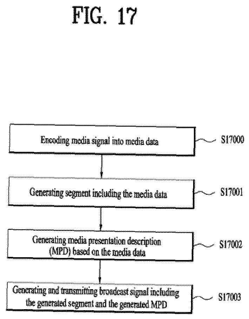

The receiver 12000 according to the embodiments may include a depacketizer 12001, an MPD parser 12002, a segment parser 12003, a decoder 12004, a renderer 12005, and/or a user interface (UI). A detailed description of the renderer 12005 and the UI will be made later with reference to FIG. 17.

The depacketizer 12001 may receive a segment including media data and a broadcast signal containing an MPD. The depacketizer 12001 may deliver the MPD contained in the received broadcast signal to the MPD parser 12002 and deliver the segment to the segment parser 12003.

The MPD parser 12002 may parse the MPD including supplemental metadata related to the media data of FIG. 6 in real time, and generate a command allowing the receiver 12000 to acquire a necessary segment.

The MPD parser 12002 may deliver information related to the media data to the renderer based on the acquired MPD. For example, the MPD parser 12002 may deliver color conversion information to the renderer.

The segment parser 12003 may parse the segment acquired based on the MPD of FIG. 6 in real time, extract media data included in the segment, and deliver the same to the decoder 12004.

The decoder 12004 generates a linear signal by decoding the acquired media data. The decoder 12004 may perform a specific operation of the renderer 12005, using the generated linear signal.

The decoder 12004 may perform the decoding process of FIG. 6 described above.

According to embodiments, the receiver 12000 preferentially acquires the MPD. Then, it makes a request for an appropriate segment to the HTTP server based on the information described in the MPD. After acquiring the segment, it decods the media data included in the segment and delivers the same to the renderer 12005 so as to be displayed on a screen. The receiver 12000 adaptively requests and acquires necessary segments by reflecting the playback time and network conditions in real time, and delivers the same to to the renderer 12005, thereby supporting seamless content playback.

FIG. 13 is a diagram illustrating a configuration of a transmitter according to embodiments.

A transmitter 13000 according to the embodiments may include an encoder 13001, an MPD generator 13004, a segment generator 13002 and/or a transmitter 13003.

The encoder 13001 may generate media data by encoding a media signal, and may deliver the same to the MPD generator 13001 and the segment generator 13002.

The encoder 13001 may perform the encoding process of FIG. 6.

The MPD generator 13004 may generate an MPD based on the acquired media data and deliver the same to the transmitter 13003.

The MPD generator 13004 may generate an MPD including supplemental metadata related to the media data of FIG. 6.

The segment generator 13002 may generate a segment based on the acquired media data and deliver the same to the transmitter 13003.

The segment generated by the segment generator 13002 may be based on media data including the HDR content of FIG. 6.

The transmitter 13003 may generate and transmit a broadcast signal containing the acquired MPD and the acquired segment.

The broadcast signal transmitted by the transmitter 13003 may refer to a bitstream containing the media data of FIG. 6.

FIG. 14 depicts dynamic tone mapping according to embodiments in comparison to static tone mapping.

This figure depicts a case where the dynamic tone mapping 14000 is applied in the broadcast signal reception apparatus according to the above-described embodiments of FIG. 8 in comparison to the case where the static tone mapping 14001 is applied.

The static tone mapping 14001 includes MacFALL (Maximum Frame-Average Light Level) and MaxCLL (Maximum Content Light Level). MacFALL and MaxCLL apply only one tone mapping curve to the entire media signal.

In an embodiment, the same tone mapping curve is applied to a frame having a luminance of 200 nits, a frame having a luminance of 1500 nits, and a frame having a luminance of 4000 nits. In this case, as the same tone mapping is performed on the frames having different luminance ranges, it is difficult to implement various luminance ranges.

In contrast, the dynamic tone mapping 14000 according to the embodiments may apply different tone mapping curves on a scene by scene basis or a frame by frame basis.

For example, the dynamic tone mapping 14000 may apply a tone mapping curve having a maximum luminance value of 500 nits of the input image essence and a maximum luminance value of 500 nits of a target display to a frame having a luminance of 200 nits. In addition, the dynamic tone mapping 14000 may apply a tone mapping curve having a maximum luminance value of 1500 nits of the input image essence and a maximum luminance value of 500 nits of the target display to a frame having a luminance of 1500 nits. In addition, the dynamic tone mapping 14000 may apply a tone mapping curve having a maximum luminance value of 4000 nits of the input image essence and a maximum luminance value of 500 nits of the target display to a frame having a luminance of 4000 nits.

As described above, the broadcast signal reception apparatus to which the dynamic tone mapping 14000 according to the embodiments is applied and the broadcast signal reception method according to the same may dynamically map a luminance range for the acquired media data. In this case, the broadcast signal reception apparatus according to the embodiments may signal luminance information adaptive to various scene characteristics of the received HDR content.

Accordingly, the broadcast signal transmission apparatus according to the embodiments may dynamically map the luminance range of the media data, and thus the broadcast signal reception apparatus according to the embodiments may dynamically express and provide the media data to the user.

The above-described range of luminance for media data may be included in color volume information about the media data.

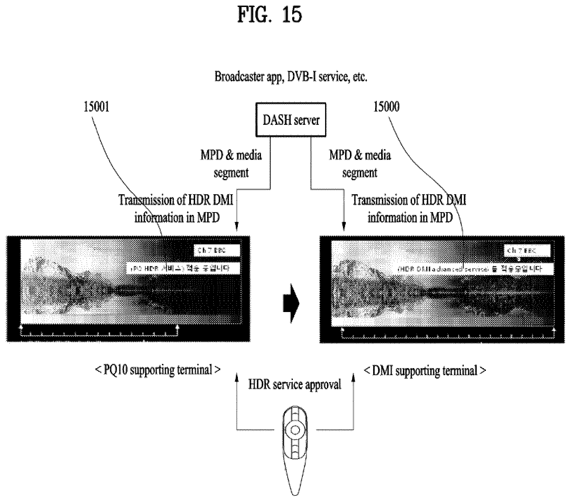

FIG. 15 illustrates a UI/UX of the receiver renderer 12005 according to embodiments.

When DMI information is included in the MPD transmitted by the transmitter 13000 according to the embodiments, the PQ10 bitstream may provide a media quality of a level provided by the PQ10 based HEVC HDR UHDTV IRD, which does not support DMI, and the DMI may enable further improvement of the media quality. Here, the HEVC HDR UHDTV IRD (HEVC HDR Ultra High Definition TV Integrated Receiver Decoder) may refer to the receiver of FIG. 11 and the receiver 12000 of FIG. 12 described above.

This figure illustrates an embodiment of a UI/UX displayed by the renderer 12005 of FIG. 12 according to the embodiments.

The broadcast signal reception apparatus according to the embodiments may receive a broadcast signal containing an MPD and a segment.

The MPD parser 12002 of FIG. 12 included in the broadcast signal reception apparatus according to the embodiments may deliver media data related information included in the acquired MPD to the renderer 12005 of FIG. 12. For example, the media data related information may be information about dynamic mapping information (DMI) of HDR content.

The renderer 12005 according to the embodiments may display the media data related information acquired from the MPD parser 12005 of FIG. 12. Specifically, when HDR DMI information is included in the received MPD, the renderer 12005 according to the embodiments may display the media data related information depending on whether the user approves the HDR service and/or the reception capability of the receiver 12000.

For example, when DMI information is present in the MPD received by the receiver 12000, the user approves the HDR service, and the receiver 12000 supports DMI, the renderer 12005 may display the media data to which DMI is applied. In this case, the renderer 12005 may display information on whether the DMI is applied. For example, the renderer 12005 may display a phrase 15000 saying "HDR DMI advanced service applied."

When DMI information is present in the MPD received by the receiver 12000 and the user has approved the HDR service, but the receiver 12000 does not support the DMI, the renderer 12005 may display media data to which the DMI is not applied. In this case, the renderer 12005 may display information on whether the DMI is applied. For example, the renderer 12005 may display a phrase 15001 saying "PQ HDR service applied."

The renderer 12005, a renderer, or a displayer according to embodiments may display (or render) the media data on the screen of the display.

Further, the media data related information based on the MPD according to the embodiments may be displayed on the screen of the display as guide information for the user. Specifically, the guide information for the user related to the media data may be information on whether dynamic tone mapping is applied.

The above-described guide information for the user may take the form of an audible audio signal or a vibration signal of the remote control. For example, the guide information may be provided to the user through a phrase 15000 saying "HDR DMI advanced service applied" or "PQ HDR service applied." In addition, depending on the receiver, a guide phrase saying "HDR+10 service applied" or "vision service applied" may be provided to the user. The expression of the above-described guide phrase is not limited to the embodiments.

In addition, the guide information for the user according to the embodiments may be displayed on the entire and/or partial area of the screen. The guide information according to the embodiments may be displayed on the media data in an overlapping manner. When the guide information according to the embodiments is displayed on the screen, the displayed media data may be out of focus and only the guide information may be focused. When the guide information according to the embodiments is displayed on the screen, the displayed media data may be black screened for a while.

The guide information for the user according to embodiments may be displayed along with channel information. The guide information according to the embodiments may be displayed in an area spaced apart from the channel information. According to embodiments, the guide information may be displayed while covering channel information. According to embodiments, the guide information may be displayed while being covered by the channel information. According to embodiments, the guide information may be displayed after channel information disappears.

According to embodiments, the guide information for the user may be expressed in the form of vibration from a remote control. The above-described vibration may be presented only once by lasting for a certain period of time. When having a certain periodicity, the above-described vibration may be presented two or more times for a certain period of time.

As shown in FIG. 15, it may be seen, from the comparison between the display of a terminal supporting the PQ system but not supporting the DMI and the display of the PQ system and DMI supporting terminal, that the luminance expression range of media data changes in various ways.

For example, the display of a terminal that does not support DMI cannot properly present a relatively dark part positioned on the right side of the screen, but the display of a terminal that supports DMI may present various luminance ranges over the entire screen area.

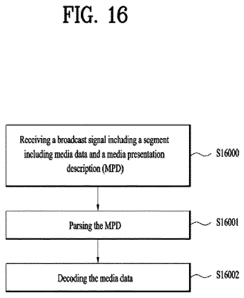

FIG. 16 is a diagram illustrating a broadcast signal reception method according to embodiments.

The broadcast signal reception method according to the embodiments may include receiving a broadcast signal including a segment including media data and a media presentation description (MPD) (S 16000), parsing the MPD (S 16001), and/or decoding the media data (S 16002).

In embodiments, the depacketizer 12001 may perform the operation S 16000 of receiving a broadcast signal including a segment including media data and the MPD. The operation S 16000 of receiving a broadcast signal including a segment including the media data and the MPD according to the embodiments has been described above with reference to FIG. 12.

In embodiments, the MPD parser 12002 may perform the operation S 16001 of parsing the MPD. A detailed configuration of the MPD according to the embodiments has been described above with reference to FIG. 4, and the operation S 16001 of parsing the MPD according to the embodiments has been described above with reference to FIG. 12.

In embodiments, the decoder 12005 may include the operation S 16002 of decoding the media data. The operation S 16002 of decoding the media data according to embodiments has been described above with reference to FIGS. 5, 6 and 12.

In embodiments, the media data may include high dynamic range (HDR) content and may be decoded based on a high efficiency video codec (HEVC).

In embodiments, a luminance range for the media data may be dynamically mapped.

In embodiments, the MPD may include EssentialProperty information and SupplementalProperty information, wherein the EssentialProperty information may include information for HDR property, and the SupplementalProperty may include information for dynamic mapping.

In embodiments, the SupplementalProperty information may include uniform resource identifier (URI) information for HDR dynamic mapping information and a value for the HDR dynamic mapping information.

In embodiments, the broadcast signal reception method may further include rendering the media data, wherein information related to the media data may be displayed based on the MPD.

In embodiments, the renderer 12005 may perform the operation of rendering the media data. The rendering of the media data by the renderer 12005 has been described above with reference to FIGS. 5, 6 and 15.

FIG. 17 is a diagram illustrating a broadcast signal transmission method according to embodiments.

The broadcast signal transmission method according to the embodiments may include encoding a media signal into media data (S 17000), generating a segment including the media data (S17001), and generating a media presentation description (MPD) based on the media data (S 17002), and/or generating and transmitting a broadcast signal including the generated segment and the generated MPD (S 17003).

In embodiments, the encoder 13000 may perform the operation S 17000 of encoding the media signal into media data. The encoding operation S 17000 according to the embodiments has been described above with reference to FIGS. 5, 6 and 13.

In embodiments, the segment generator 13002 may perform the operation S 17001 of generating a segment including the media data. The operation S 17001 of generating a segment including the media data according to the embodiments has been described above with reference to FIG. 13.

In embodiments, the MPD generator 13001 may perform the operation S 17002 of generating an MPD. The detailed configuration of the MPD according to the embodiments has been described above with reference to FIG. 4, and the operation S 17002 of generating an MPD according to the embodiments has been described above with reference to FIG. 13.

In embodiments, the transmitter 13003 may perform the operation S 17003 of generating and transmitting a broadcast signal including the generated segment and the generated MPD. The operation S 17003 of transmitting the broadcast signal according to the embodiments has been described above with reference to FIG. 13.

In embodiments, the media data may include High Dynamic Range (HDR) content and may be encoded based on a High Efficiency Video Codec (HEVC).

In embodiments, a luminance range for the media data may be dynamically mapped.

In embodiments, the MPD may include EssentialProperty information and SupplementalProperty information, wherein the EssentialProperty information may include information for HDR property, and the SupplementalProperty information may include information for dynamic mapping information, URI information for HDR dynamic mapping information, and a value for the HDR dynamic mapping.

Each part, module, or unit described above may be software, a processor, or a hardware part that executes successive procedures stored in a memory (or storage unit). The respective operations described in the embodiments above may be performed by software, processors or hardware parts. Each module/block/unit described in the examples above may operate as a processor, software, or hardware. In addition, the methods proposed in the embodiments may be realized by code. The code may be written in a recoding medium readable by a processor so that the code may be read by the processor provided by the apparatus.

Although the description of the present disclosure is made with reference to each of the accompanying drawings for clarity, it is possible to design new examples by merging the examples shown in the accompanying drawings with each other. If a recording medium readable by a computer, in which programs for executing the examples mentioned in the foregoing description are recorded, is designed by those skilled in the art, it may fall within the scope of the appended claims and their equivalents.

The devices and methods according to the embodiments may not be limited by the configurations and methods of the examples mentioned in the foregoing description. The examples mentioned in the foregoing description may be configured in a manner of being selectively combined with one another entirely or in part to enable various modifications.

In addition, the proposed methods according to the embodiments may be implemented with processor-readable code in a processor-readable recording medium provided to a network device. The processor-readable medium may include all kinds of recording devices capable of storing data readable by a processor. The processor-readable medium may include one of ROM, RAM, CD-ROM, magnetic tapes, floppy disks, optical data storage devices, and the like and also include carrier-wave type implementation such as a transmission via Internet. Furthermore, as the processor-readable recording medium is distributed to a computer system connected via a network, processor-readable code may be saved and executed in a distributed manner.

Although the disclosure has been described with reference to the exemplary examples, those skilled in the art will appreciate that various modifications and variations may be made in the embodiments without departing from the spirit or scope of the disclosure described in the appended claims. Such modifications are not to be understood individually from the technical idea or viewpoint of the present disclosure

It will be appreciated by those skilled in the art that various modifications and variations may be made in the embodiments without departing from the spirit or scope of the disclosures. Thus, it is intended that the present disclosure covers the modifications and variations of this disclosure provided they come within the scope of the appended claims and their equivalents.

In the present disclosure, both an apparatus disclosure and a method disclosure are mentioned, and the descriptions of both the apparatus and method disclosures may be applied to complement each other.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C."

Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Terms such as first and second may be used to describe various elements of the embodiments. However, various elements according to the embodiments should not be limited by the above terms. These terms are only used to distinguish one element from another.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if' and "when" are not limited to an optional case and are intended to be interpreted, when a specific condition is satisfied, to perform the related operation or interpret the related definition according to the specific condition.

### [Mode for the Disclosure]

A detailed description has been made in the best mode.

### [Industrial Applicability]

The present disclosure is applicable in a series of broadcast signal provision fields.

It will be apparent to those skilled in the art that various modifications and variations can be made in the present disclosure without departing from the spirit or scope of the invention. Thus, it is intended that the present disclosure cover the modifications and variations of this invention provided they come within the scope of the appended claims and their equivalents.

## Claims

1. A method for receiving a broadcast signal, the method comprising:
receiving a broadcast signal including a segment including media data and a MPD (Media Presentation Description);
parsing the MPD; and
decoding the media data.

2. The method according to claim 1, wherein the media data includes HDR (High Dynamic Range) content, and is decoded based on a HEVC (High Efficiency Video Codec).

3. The method according to claim 1, wherein a luminance range for the media data is dynamically mapped.

4. The method according to claim 1, wherein the MPD includes EssentialProperty information and SupplementalProperty information,
wherein the EssentialProperty information includes information for HDR property, and the SupplementalProperty includes information for dynamic mapping.

5. The method according to claim 4, wherein the SupplementalProperty further includes URI (Uniform Resource Identifier) information for HDR dynamic mapping information and a value for the HDR dynamic mapping.

6. The method according to claim 1, the method further comprising:
rendering the media data,
wherein information related to the media data based on the MPD is displayed on a screen,
wherein the information related to the media data indicates that the media data is rendered based on dynamic mapping information.

7. An apparatus for receiving a broadcast signal, the apparatus comprising;
a depacketizer to receive a broadcast signal including a segment including media data and a MPD (Media Presentation Description);
a parser to parse the MPD; and
a decoder to decode the media data.

8. The apparatus according to claim 7, wherein the media data includes HDR (High Dynamic Range) contents, and is decoded based on a HEVC (High Efficiency Video Codec).

9. The apparatus according to claim 7, wherein a luminance range for the media data is dynamically mapped.

10. The apparatus according to claim 7, wherein the MPD includes EssentialProperty information and SupplementalProperty information,
wherein the EssentialProperty information includes information for HDR property, and the SupplementalProperty includes information for dynamic mapping information.

11. The apparatus according to claim 10, wherein the SupplementalProperty includes URI (Uniform Resource Identifier) information for HDR dynamic mapping information and a value for the HDR dynamic mapping.

12. The apparatus according to claim 7, further comprising;
a renderer to render the media data,
wherein information related to the media data based on the MPD is displayed on a screen,
wherein the information related to the media data indicates that the media data is rendered based on dynamic mapping information.

13. A method for transmitting a broadcast signal, the method comprising;
encoding a media signal into media data;
generating a segment including the media data;
generating an MPD (Media Presentation Description) based on the media data; generating and transmitting a broadcast signal including the segment and the MPD.

14. The method according to claim 13, wherein the media data includes HDR (High Dynamic Range) content, and is encoded based on a HEVC (High Efficiency Video Codec).

15. The method according to claim 13, wherein a luminance range for the media data is dynamically mapped.

16. The method according to claim 13, wherein the MPD includes EssentialProperty information and SupplementalProperty information,
wherein the EssentialProperty information includes information for HDR property, and the SupplementalProperty includes information for dynamic mapping information, URI information for HDR dynamic mapping information and a value for the HDR dynamic mapping.

17. An apparatus for transmitting a broadcast signal, the apparatus comprising;
a media encoder to encode a media signal into media data;
a segment generator to generate a segment including the media data;
an MPD (Media Presentation Description) generator to generate an MPD based on the media data;
a transmitter to generate and transmit a broadcast signal including the segment and the MPD.

18. The apparatus according to claim 17, the media data includes HDR (High Dynamic Range) contents, and is decoded based on a HEVC (High Efficiency Video Codec).

19. The apparatus according to claim 17, wherein a luminance range for the media data is dynamically mapped.

20. The apparatus according to claim 17, wherein the MPD includes EssentialProperty information and SupplementalProperty information,
wherein the EssentialProperty information includes information for HDR property, and the SupplementalProperty includes information for dynamic mapping information, URI information for HDR dynamic mapping information and a value for the HDR dynamic mapping.
